# EUROPEAN PATENT SPECIFICATION

(11) **EP 1 707 660 B1**
(45) Date of publication and mention of the grant of the patent: **29.02.2012**
(21) Application number: 05425192.1
(22) Date of filing: 01.04.2005
(51) Int. Cl.: D06F 37/20

(54) **Improved washing-machine and similar household appliances with rotary drum**
Verbesserte Waschmaschine und ähnliche Haushaltsgeräte mit einer Trommel
Lave-linge amélioré et appareil ménager semblable avec un tambour

(43) Date of publication of application: 04.10.2006
(73) Proprietor: Askoll Holding S.r.l., 36031 Povolaro di Dueville (Vicenza) (IT)
(72) Inventor: Marioni, Elio, 36031 Dueville (Vicenza) (IT)
(74) Representative: Botti, Mario

(56) References cited:
- EP-A- 1 424 427
- FR-A- 2 691 593
- FR-A- 2 742 843
- GB-A- 1 318 779
- US-A- 5 775 138

## Description

### Field of application

The present invention relates, in its more general aspect, to a washing machine and similar rotary drum household appliances, see GB1318779, FR2691593, FR2742843, US5775138.

In particular, but not limitatively, this invention relates to a machine as above comprising a central-axis electric motor and a washing tank.

### Prior art

As it is known, the washing machine rotary drum is rotation-actuated by a central-axis electric motor, connected, by means of a driving belt, to a pulley being integral with the rotary drum.

The electric motor is fixed on the washing tank by means of a fixing bracket welded to the tank itself. In particular the fixing bracket is screwed, welded or otherwise locked to the washing tank surface.

In order to allow the electric motor to be fixed to the fixing bracket, the motor must be assembled on a motor bearing. The fixing occurs by screwing the motor bearing onto the fixing bracket in several points.

This working mode involves a certain assembly difficulty due, first of all, to the motor bearing assembly to the electric motor itself. Moreover the motor bearing must be precisely positioned in correspondence with the screwing points to the fixing bracket for the subsequent screwing.

A further drawback is caused by the high vibration due to the rotary drum rotary motion which can jeopardize the fixing in one or more fixing points and lead to noise problems during the washing machine working.

The technical problem underlying the present invention is thus to simplify the washing machine assembly allowing the electric motor to be rapidly and securely fixed, overcoming the limits and/or drawbacks still limiting the washing machines realised according to the prior art.

### Summary of the invention

The solution provided by the present invention is to design a washing tank comprising a fixing bracket to engage and rapidly lock the electric motor, favouring the rapid positioning thereof and a balanced and secure locking to the washing tank.

This technical problem is solved according to the present invention by a washing machine according to Claim 1.

Further features and advantages of the washing tank and of the assembly method according to the invention will be apparent from the following description of an embodiment thereof with reference to the attached drawings given by way of non-limiting example.

### Brief description of the drawings

- Figure 1 schematically shows the washing tank of a washing machine comprising a fixing bracket and a central-axis electric motor according to the present invention;
- Figures 2a, 2b, 2c, 2d schematically show the washing tank close to the fixing bracket and a coupling plate; an electric motor; the electric motor in engagement with the fixing bracket; the electric motor definitively fixed to the fixing bracket respectively.
   Such an embodiment is not part of the present invention.

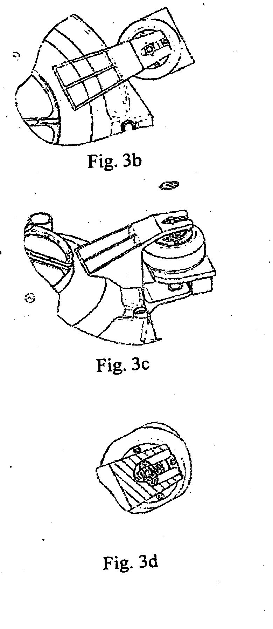

- Figures 3a, 3b, 3c, 3d, 3e schematically show a motor and the washing tank close to the fixing bracket, associated to an insertion and side-clamping plate respectively according to: a top view wherein the insertion and clamping plate is not clamped; a top view with the insertion and clamping plate being clamped; a perspective view with the insertion and clamping plate not being inserted; a top sectional view with the insertion and clamping plate being clamped; an exploded perspective view.
- Figures 4a, 4b, schematically show an electric motor and the washing tank close to the fixing bracket, associated with an insertion and clamping plate incorporated onto the central axis. The figures relate to a perspective view being respectively exploded and assembled.
   Such an embodiment is not part of the present invention.
- Figures 5a, 5b, 5c and 5d schematically show an electric motor and the washing tank close to the fixing bracket, associated with a coupling plate and with a screwing bush. The figures are respectively assembled, exploded, with a detail of the screwing bush and exploded, from different anglers.
   Such an embodiment is not part of the present invention.
- Figures 6a, 6b, 6c schematically show the washing tank close to the fixing bracket associated with a coupling plate respectively exploded, exploded with the motor being inserted, assembled and clamped.
   Such an embodiment is not part of the present invention.

### Detailed description

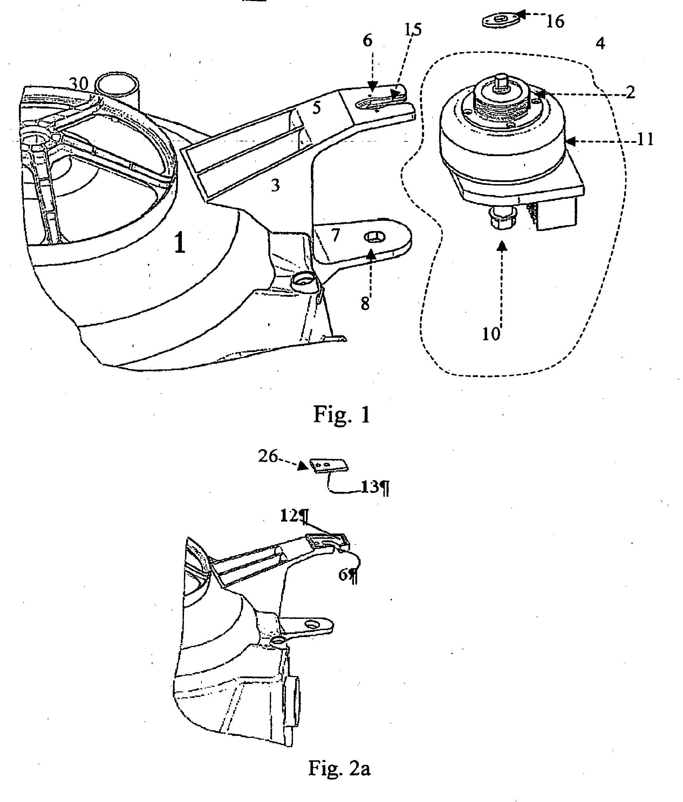

With reference to figure 1, the washing tank of a washing machine as previously indicated is schematically shown and indicated with 1. Figure 1 shows a detail of the washing machine, concerning the back part, with respect to the laundry insertion door of the washing tank 1.

In particular the driving pulley 30 of the rotary motion transmitted from the electric motor 4 to the rotary drum can be noted on the back part of the washing tank 1. This rotary drum, not shown in this figure, lies inside the washing tank 1. The washing tank 1 has a projecting part, hereafter indicated as fixing bracket 3, comprising a first and a second arm to fix the electric motor 4 to the washing tank 1.

Advantageously, according to the present invention, the fixing bracket 3 to fix the electric motor 4 to the washing tank 1 comprises a first arm 5 and means associated to said first arm 5 to lock the central axis 10 to the first arm 5.

A second arm is also provided in the bracket 3 which is substantially "C"-shaped like a globe support.

The means associated to the first arm 5 comprise an assisted-insertion slot 6 made at the end of said first arm 5.

The first arm 5 comprises a groove 12 obtained on the surface thereof and a plate 26 coupling with the groove 12, having a through hole 13 with the same shape as the upper end of the central axis 10.

Said means also comprise a longitudinal slot 15 being parallel to the surface of the first arm 5 made in correspondence with the assisted-insertion slot 6 and an insertion and clamping plate 16, inserted through the central axis 10 at the end of the assisted-insertion slot 6 and clamped in the longitudinal insertion slot 15.

An insertion and clamping plate 18 directly assembled on said central axis 10 can be inserted through the longitudinal slot 15 jointly with the central axis 10 and clamped in the longitudinal insertion slot itself.

Said longitudinal slot 15, in correspondence with the end part of the assisted-insertion slot 6 is such as to ensure a secure clamping motion of said insertion and clamping plate 16.

A second arm 7, whose end has an engaging through hole 8, is used to fix the electric motor to the washing machine tank.

An engaging through hole 8 obtained in the second arm 7 and the lower end of the central axis 10, engaging in the engaging through hole 8, have a conjugate shape and such as to prevent the rotary motion.

Further locking means comprise a joint insertion channel 19 made at the end of said arm 5 and a plate 20 of joint with the joint insertion channel 19, having a non-through hole 21 with the same shape as the upper end of the central axis 10.

One or more bushes 22, welded to the washing tank 1, and a bush screwing bearing 23, fitted onto the central axis 10, are used like fixing means in a further alternative embodiment of the invention.

Figure 1 schematically shows the detail of the washing tank corresponding to the fixing bracket indicated with 3, in an embodiment according to the present invention. The fixing bracket 3, in this example given by way of non limiting example, comprises a first arm 5 and a second arm 7. This first arm 5 has, at the end thereof, an assisted-insertion slot 6 with such a thickness as to favour the insertion of the central axis 10 of the electric motor 4.

Figure 1 also shows an inner-stator electric motor, constrained to a central axis 10. Outside the inner stator 2, an outer rotor, indicated with 11, is free to rotate around the inner stator 2. Also this example of inner-stator and outer-rotor electric motor is given by way of non limiting example with respect to other kinds of electric motors.

The assisted-insertion slot 6, with an overall thickness corresponding to the diameter of the central axis 10, has a thickening in the end part of the assisted-insertion slot 6.

The second arm 7 of the fixing bracket 3 has instead a through hole with a conjugate shape with respect to the lower part of the central axis 10. The figure also shows an insertion and clamping plate 16 comprising a hole with a conjugate shape with respect to the upper part of the central axis 10.

A longitudinal slot 15 is made in correspondence with the assisted-insertion slot 6.

Advantageously, according to the present invention, the assembly of the electric motor 4 to the washing tank 1 occurs by means of the fast engagement of the lower part of the central axis 10 in the through hole 8 of the second arm 7 and the sideways assisted insertion of the axis 10 itself in the assisted-insertion slot 6.

The insertion being performed, the fixing of the central axis 10 to the arm 5 of the fixing bracket 3 occurs by inserting the insertion and clamping plate 16 through the central axis 10 and by clamping it through a semicircular motion, inside the longitudinal slot 15.

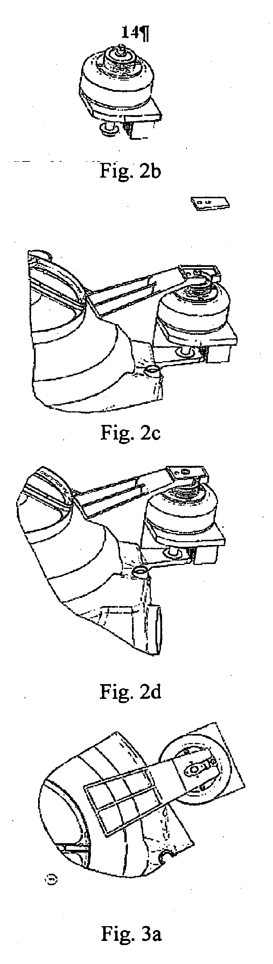

Different embodiments not being part of the present invention allow the electric motor 4 to be locked. In an embodiment being different from the above-described one and schematically shown in figure 2, the fixing of the central axis 10 to the first arm 5 occurs by means of a coupling plate 26, fitted through the central axis 10 in the groove 12 and hinged thereto.

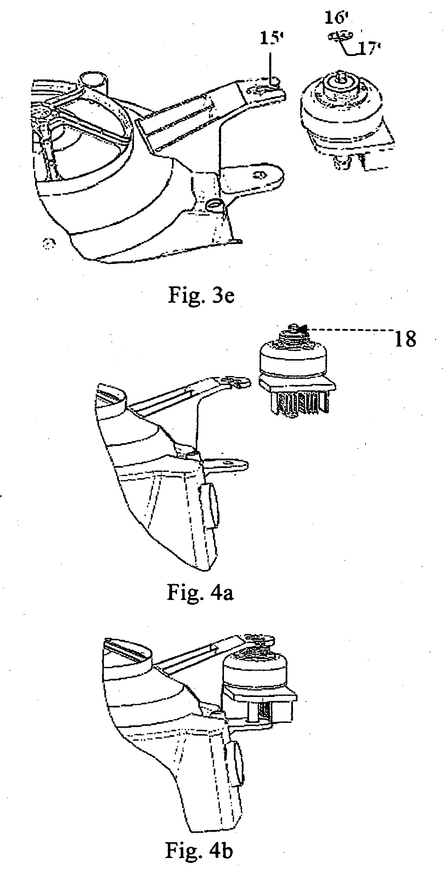

A further embodiment, schematically shown in figure 4, provides that the insertion and clamping plate 18 is directly assembled on the central axis 10; the insertion of the insertion and clamping plate 18 in the first arm 5 is allowed by the longitudinal slot 15 and it occurs simultaneously with the insertion of the central axis 10 in the assisted-insertion slot 6.

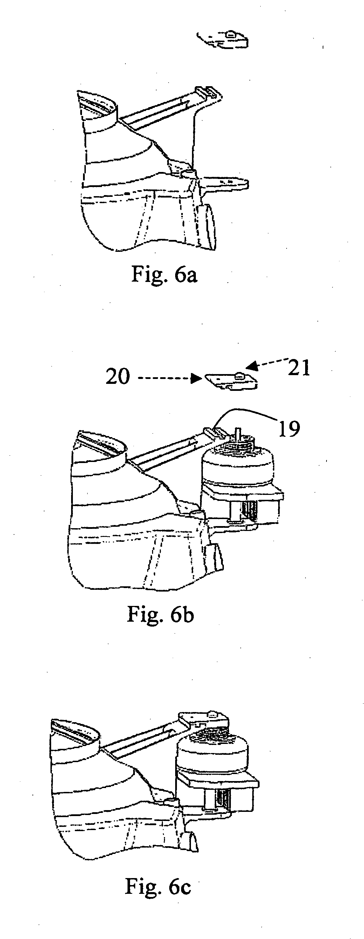

Figure 6 shows a further embodiment wherein a joint plate 20 is fitted to the central axis 10 by means of a non-through hole 21; the final fixing of the central axis 10 to the fixing bracket 3 occurs by jointing the joint plate 20 in the insertion channel 19 of the first arm 5.

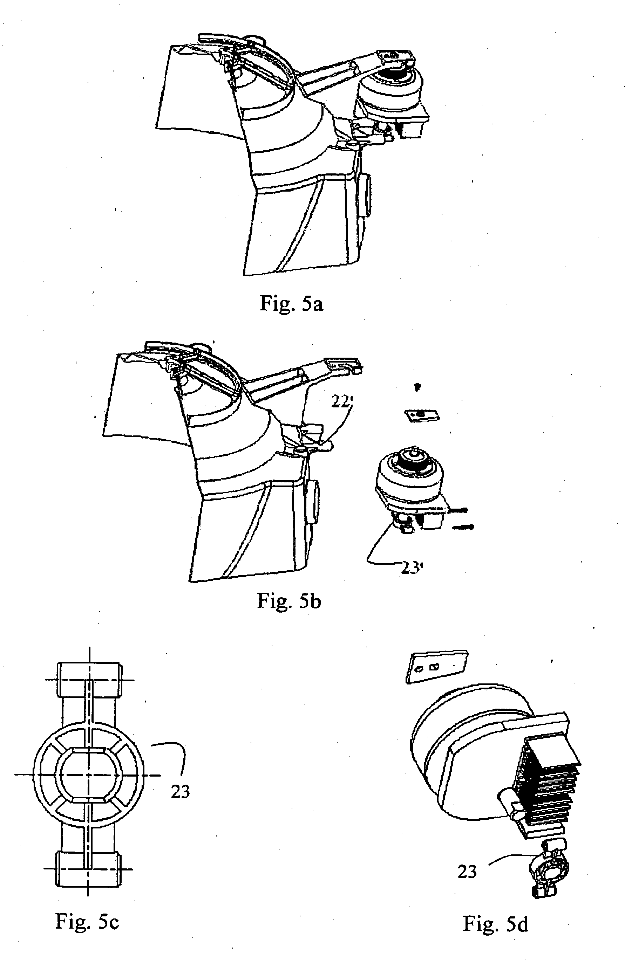

In all the above-described embodiments, the central axis 10 is engaged in the through hole 8 of the second arm 7. Alternatively the second arm 7 can comprise, as figure 5 shows, a screwing bearing 22. In that case a screwing bush 23, allowing the central axis 10 to be fixed to the screwing bearing 22, is fitted on the lower part of the axis 10

The locking system and method according to the present invention thus solve the technical problem and they achieve several advantages, the first being given by the fact that the assembly of the washing machine electric motor is considerably simplified by an engaging insertion and rapid fixing.

Moreover, the system according to the invention ensures that the electric motor fixing is balanced and that the washing machine operation is not changed in time.

## Claims

1. A washing machine, comprising,
- an electric motor (4) with a central axis (10),
- a washing tank (1),
- a fixing bracket (3) to fix the electric motor (4) to the tank (1),
- said fixing bracket (3) comprising a first arm (5) and a second arm (7),
- means (6, 15) associated with said first arm (5) to clamp the central axis (10) of the electric motor (4).
**characterised in that**
said second arm (7) has at the end thereof an engaging through hole (8) having a conjugate shape with respect to said lower part of said central axis (10) and being such as to prevent the rotary motion thereof,
said means (6, 15) associated with said first arm (5) comprising an assisted-insertion slot (6) made at the end of said first arm (5) and a longitudinal slot (15) being parallel to the surface of the first arm (5) made in correspondence with the assisted-insertion slot (6),
said washing machine further comprising an insertion and clamping plate (16), inserted through the central axis (10) in the end of the assisted-insertion slot (6) and clamped in the longitudinal insertion slot (15),
said longitudinal slot (15), in correspondence with the end part of the assisted-insertion slot (6), being configured in such a way as to ensure clamping of said insertion and clamping plate (16) by a semi-circular motion of said plate within said longitudinal slot (15).

2. A washing machine according to claim 1, **characterised in that** said washing tank (1) and said fixing bracket (3) are monolithic.

3. A washing machine according to claim 1, **characterised in that** said washing tank (1) comprises one or more bushes (22).

4. A washing machine according to claim 3, **characterised in that** said means comprise a screwing bearing (23) to the bushes (22), fitted onto the central axis (10).

## Patentansprüche

1. Waschmaschine, die Folgendes umfasst:
- einen Elektromotor (4) mit einer zentralen Achse (10),
- einen Waschtank (1),
- einen Haltewinkel (3) zum Befestigen des Elektromotors (4) an dem Tank (1),
- wobei der genannte Haltewinkel (3) einen ersten Arm (5) und einen zweiten Arm (7) umfasst,
- Mittel (6, 15) in Verbindung mit dem genannten ersten Arm (5) zum Einspannen der zentralen Achse (10) des Elektromotors (4),
**dadurch gekennzeichnet, dass**
der genannte zweite Arm (7) an seinem Ende ein Eingriffsdurchgangsloch (8) mit einer konjugierten Form in Bezug auf den genannten unteren Teil der genannten zentralen Achse (10) und die Aufgabe hat, seine Drehbewegung zu verhindern,
wobei die genannten Mittel (6, 15) in Verbindung mit dem genannten ersten Arm (5) einen Schlitz (6) zum unterstützten Einführen am Ende des genannten ersten Arms (5) und einen Längsschlitz (15) aufweisen, der parallel zur Oberfläche des ersten Arms (5) verläuft und dem Schlitz (6) zum unterstützten Einführen entspricht,
wobei die genannte Waschmaschine ferner eine Einführungs- und Einspannplatte (16) umfasst, die durch die mittlere Achse (10) im Ende des Schlitzes (6) zum unterstützten Einführen eingeführt und in dem Längseinführungsschlitz (15) eingespannt wird,
wobei der genannte Längsschlitz (15), entsprechend dem Endteil des Schlitzes (6) zum unterstützten Einführen, so konfiguriert ist, das ein Einspannen der genannten Einführung- und Einspannplatte (16) durch eine halbkreisförmige Bewegung der genannten Platte in dem genannten Längsschlitz (15) gewährleistet wird.

2. Waschmaschine nach Anspruch 1, **dadurch gekennzeichnet, dass** der Waschtank (1) und der genannte Haltewinkel (3) monolithisch sind.

3. Waschmaschine nach Anspruch 1, **dadurch gekennzeichnet, dass** der genannte Waschtank (1) eine oder mehrere Buchsen (22) umfasst.

4. Waschmaschine nach Anspruch 3, **dadurch gekennzeichnet, dass** die genannten Mittel ein Gewindelager (23) an den Buchsen (22) umfasst, montiert an der zentralen Achse (10).

## Revendications

1. Machine à laver comprenant :
- un moteur électrique (4) ayant un axe central (10),
- un réservoir de lavage (1),
- un étrier de fixation (3) pour fixer le moteur électrique (4) au réservoir (1),
- ledit étrier de fixation (3) comprenant un premier bras (5) et un second bras (7)_{.}
- des moyens (6, 15) associés audit premier bras (5) pour relier l'axe central (10) au moteur électrique (4),
**Caractérisé en ce que**
- ledit second bras (7) comporte à son extrémité un trou (8) traversant d'engagement ayant une forme conjuguée par rapport à ladite partie inférieure dudit axe central (10) et étant prévu pour éviter les mouvements de rotation de celui-ci,
- lesdits moyens (6, 15) étant associés audit premier bras (5) comprenant une encoche (6) d'insertion assistée réalisée à l'extrémité dudit premier bras (5) et une encoche longitudinale (15) disposée parallèlement à la surface dudit premier bras (5) réalisée en correspondance avec l'encoche (6) d'insertion assistée,
- ladite machine à laver comprenant de plus une plaque (16) d'insertion et de fixation, insérée à travers l'axe central (10) à l'extrémité de l'encoche (6) d'insertion assistée et fixée dans l'encoche longitudinale (15) d'insertion,
- ladite encoche longitudinale (15), en correspondance avec la partie terminale de l'encoche (6) d'insertion assistée, étant configurée de manière à assurer la fixation de ladite plaque (16) d'insertion et de fixation grâce à un mouvement semi-circulaire de ladite plaque à l'intérieur ladite encoche longitudinale (15).

2. Machine à laver selon la revendication 1, **caractérisée en ce que** ledit réservoir de lavage (1) et ledit étrier de fixation (3) sont monolithiques.

3. Machine à laver selon la revendication 1, **caractérisée en ce que** ledit réservoir de lavage (1) comprend un ou plusieurs coussinets (22).

4. Machine à laver selon la revendication 3, **caractérisée en ce que** lesdits moyens comprennent une bague filetée (23) sur les coussinets (22), fixée sur l'axe central (10).
